(19) Europäisches Patentamt
European Patent Office
Office européen des brevets

(11) Publication number: **0 142 317**
**A2**

# (12) EUROPEAN PATENT APPLICATION

(21) Application number: 84307605.0

(22) Date of filing: 05.11.84

(51) Int. Cl.⁴: C 01 B 33/28

(30) Priority: 16.11.83 US 552564

(43) Date of publication of application: 22.05.85 Bulletin 85/21

(84) Designated Contracting States: BE DE FR GB IT NL SE

(71) Applicant: MOBIL OIL CORPORATION
150 East 42nd Street
New York New York 10017(US)

(72) Inventor: Valyocsik, Ernest William
960 Randolph Drive
Yardley Pennsylvania 19067(US)

(74) Representative: West, Alan Harry
Mobil Court 3 Clements Inn
London WC2A 2EB(GB)

## (54) Crystalline silicate ZSM-48 and method for its preparation.

(57) In the synthesis of ZSM-48, the use of certain diquaternary amonium compounds as directing agents permits higher $SiO_2/Al_2O_3$ ratios in the reaction mixture and ZSM-48 products having higher structural alumina contents and hence higher catalytic activity than can be attained by conventional synthesis techniques.

EP 0 142 317 A2

# CRYSTALLINE SILICATE ZSM-48 AND METHOD FOR ITS PREPARATION

This invention relates to crystalline silicate ZSM-48 and to a method for its preparation. More especially, it relates to an improved method for preparing crystalline silicate ZSM-48 by means of which synthesis is facilitated and the zeolite product of which exhibits enhanced purity and catalytic activity when compared with ZSM-48 synthesized by known techniques.

The crystalline zeolite ZSM-48 and methods for its preparation are described in European Patent 0 015 132; ZSM-48 is defined therein in terms of its compositional formula and its characteristic X-ray diffraction pattern by means of which it is distinguished from other known crystalline zeolites. An alternative method for preparing ZSM-48 is described in European Patent 0 023 089.

When it has beeh prepared by such conventional techniques, ZSM-48 is known to possess para-selective catalytic properties; however, its catalytic activity is relatively low in certain reactions.

Also, the method for preparing ZSM-48 described in European Patent 0 023 089 requires a reaction mixture containing as organic directing agent a mixture of a $C_2$-$C_{12}$ alkylamine and a tetramethylammonium compound and a silica/alumina mole ratio of at least about 500 to avoid product contamination with other zeolites, notably ZSM-5 and ZSM-11.

According to the present invention, there is provided a synthetic crystalline silicate (known as ZSM-48) having a compositional formula in the anhydrous state expressed in terms of moles of oxides per 100 moles of silica:

$$(0.05 \text{ to } 5)R_2O:(0.1 \text{ to } 10)M_2O:(0 \text{ to } 4)Al_2O_3:(100)SiO_2$$

in which M is an alkali metal cation and R is a cation derived from a linear diquaternary ammonium compound of the general formula

$$[(R')_3N^+(Z)_mN^+(R')_3](X^-)_2$$

in which each R' is an alkyl or heteroalkyl group having from 1 to 20 carbon atoms, a cycloalkyl or cycloheteroalkyl group having from 3 to 6 carbon atoms or an aryl or heteroaryl group; Z is an alkylene or heteroalkylene group having from 1 to 20 carbom atoms, an alkenylene or heteroalkenylene group having from 2 to 20 carbon atoms, or an arylene or heteroarylene group; m is 5, 6, 8, 9 or 10; and $X^-$ is an anion; and in which one or both quaternary nitrogens $N^+$ can form part of a heteroaliphatic or heteroaromatic ring structure; and the crystalline silicate being characterized by at least the following interplanar spacings d in Angstroms (1 Angstrom = 0.1 nm) and relative intensities $100I/I_0$ derivable from the X-ray diffraction pattern of the silicate in its calcined, sodium-exchanged form:

| d | 100I/Io |
|---|---|
| 11.8 ± 0.2 | S |
| 10.2 ± 0.2 | W-M |
| 7.2 ± 0.15 | W |
| 4.2 ± 0.08 | VS |
| 3.9 ± 0.08 | VS |
| 3.6 ± 0.06 | W |
| 3.1 ± 0.05 | W |
| 2.85 ± 0.05 | W |

The present invention also provides a method for preparing such a crystalline silicate, which comprises preparing a reaction mixture containing sources of alkali metal oxide, an oxide of aluminum, an oxide of silicon a cation of a linear diquaternary ammonium compound and water and having a composition expressed in terms of mole ratios of oxides falling within the following ranges:

| | |
|---|---|
| $SiO_2/Al_2O_3$ | at least 100 |
| $H_2O/SiO_2$ | 10 to 100 |
| $OH^-/SiO_2$ | 0 to 1.0 |
| $M_2O/SiO_2$ | 0 to 1.0 |
| $R_2O/SiO_2$ | 0.005 to 1.0 |

in which M and R have the meanings given above, and maintaining the mixture at a temperature of 80 to 200°C until crystals of the silicate have formed. Preferably, the reaction mixture has a composition expressed in terms of mole ratios of oxides within the following ranges:

| | |
|---|---|
| $SiO_2/Al_2O_3$ | 100 to 10,000 |
| $H_2O/SiO_2$ | 20 to 70 |
| $OH^-/SiO_2$ | 0.1 to 0.4 |
| $M_2O/SiO_2$ | 0.05 to 0.5 |
| $R_2O/SiO_2$ | 0.025 to 0.5 |

The quantity of $OH^-$ is calculated only from the inorganic sources of alkali without any organic base contribution.

Generally, the reaction mixture is maintained at a temperature of 80 to 200°C for a period of time of about 24 hours to about 200 days, more preferably at a temperature of about 100 to about 180°C for a period of time of about 48 hours to about 150 days. Such digestion of the gel particles is carried out until crystals form. The solid product is then separated from the reaction medium, for example by cooling the whole to room temperature, filtering of the crystals and washing the crystals with water.

It should be noted that the method of the invention allows the reaction mixture silica/alumina mole ratio to be much less than 500, for example as low as 100, to produce relatively pure ZSM-48. It should be noted also, however, that the reaction mixture silica/alumina mole ratio is critical, since at less than about 100 a different crystalline silicate tends to form in place of the ZSM-48.

ZSM-48 synthesized in accordance with the invention exhibits silica/alumina mole ratios over a wide range and significantly enhanced catalytic activity in certain reactions of interest, including xylene isomerization and benzene alkylation, while maintaining para-selectivity, and conversion of methanol and dimethylether into hydrocarbons, for example olefins.

The effectiveness of the organic directing agent, i.e. the linear diquaternary ammonium compound, used according to the invention, when compared with other directing agents, such as the alkanediamines preferably used in the method of European Patent 0 015 132, and the mixtures of alkylamines and tetramethylammonium compounds used in the method of European Patent 0 023 089, is believed to be due to its ability to function as a template in the nucleation and growth of ZSM-48 crystals.

The reaction mixture used for the synthesis of ZSM-48 according to the invention can be prepared utilizing materials which supply the appropriate oxides. Such compositions include aluminates, alumina, silicates, silica hydrosol, silica gel, silicic acid and hydroxides. It will be understood that each oxide component utilized in the reaction mixture can be supplied by one or more essential reactants and they can be mixed together in any order. For example, any oxide can be supplied by an aqueous solution of its hydroxide or by an aqueous solution of a suitable silicate and the diquaternary ammonium cation can be supplied by a suitable diquaternary ammonium compound, for example the hydroxide or a salt. The reaction mixture can be prepared either batchwise or continuously. The crystal size and crystallization time of the ZSM-48 composition will vary with the exact nature of the reaction mixture employed.

The organic directing agent used according to the invention is a linear diquaternary ammonium compound of the general formula:

$$[(R')_3N^+(Z)_mN^+(R')_3](X^-)_2$$

in which each R' is an alkyl or heteroalkyl group having from 1 to 20 carbon atoms, an aryl or heteroaryl group or a cycloalkyl or cycloheteroalkyl group having from 3 to 6 carbon atoms; X is an anion (for example fluoride, chloride, bromide, iodide, hydroxide, sulfate, acetate, or other carboxylate ion); Z is an alkylene or heteroalkylene group having from 1 to 20 carbon atoms, an alkenylene or heteroalkenylene group having from 2 to 20 carbon atoms, or an arylene or heteroarylene group; _m_ is 5, 6, 8, 9 or 10; and one or both $N^+$ can form part of a heteroaliphatic or heteroaromatic ring structure, for example,

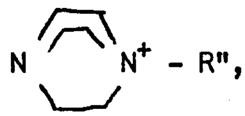, or

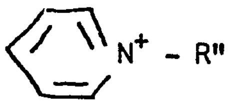

in which R" is an alkyl or heteroalkyl group having from 1 to 20 carbon atoms, an aryl or heteroaryl group or a cycloalkyl or cycloheteroalkyl group having from 3 to 6 carbon atoms.

Examples of such liner diquaternary ammonium compounds are:

$[(CH_3)_3N^+(CH_2)_6N^+(CH_3)_3](Cl^-)_2$,

$[(C_3H_7)_3N^+(CH_2)_6N^+(C_3H_7)_3](Cl^-)_2$,

$[(C_6H_5)_3N^+(C_2H_4)_6N^+(C_6H_5)_3](OH^-)_2$,

$[(C_{18}H_{37})_3N^+(C_2H_2)_6N^+(CH_3)_3](Br^-)_2$,

$[(C_6H_5)_3N^+(CH_2)_6N^+(CH_3)_3](OH^-)_2$ and

$[(C_6H_5)_3N^+(C_2H_2)_6N^+(CH_3)_3](Cl^-)_2$.

Preferred diquaternary ammonium compounds are those in which X is a halide, for example chloride, bromide or iodide, and R' is an alkyl group having from 1 to 4 carbon atoms, for example methyl, ethyl, propyl and butyl, and Z is an alkylene group having from 1 to 4 carbon atoms, for example methylene, ethylene, trimethylene and tetramethylene.

The ZSM-48 prepared by the method of the invention has a characteristic X-ray diffraction pattern in the calcined, sodium-exchanged form, the significant interplanar spacings d and relative intensities $100I/I_0$ derived therefrom being set out above.

The X-ray diffraction pattern of the ZSM-48 is further characterized by the fact that it exhibits a singlet within the range of $11.8 \pm 0.2$ Angstroms, i.e. ZSM-48 does not have more than one X-ray diffraction line at $11.8 \pm 0.2$ Angstroms. The presence of this singlet structurally

distinguishes ZSM-48 from closely related materials such as ZSM-12 (U.S. Patent 3,832,449) which has a doublet at 11.8±0.2 Angstroms and high-silica ZSM-12 (U.S. Patent 4,104,294) which also exhibits a doublet at 11.8±0.2 Angstroms.

The X-ray diffraction pattern was determined by standard techniques. The radiation was the K-alpha doublet of copper, and a diffractometer equipped with a scintillation counter and a strip chart pen recorder was used. The peak heights, I, and their positions as a function of two times theta, where theta is the Bragg angle, were read from the spectrometer chart. From these, the relative intensities, 100 $I/I_o$ where $I_o$ is the intensity of the strongest peak, and d, the interplanar spacing in Angstroms corresponding to the recorded lines, were calculated. The relative intensities are given in terms of the symbols W=weak, M=medium, S=strong and VS=very strong. Ion exchange of the sodium ions with other cations reveals substantially the same pattern with some minor shifts in interplanar spacings and variations in relative intensities. Other minor variations can occur depending on the silicon to aluminum ratio of the particular sample, and on whether the sample has been subjected to thermal treatment.

The original cations associated with the ZSM-48 can be replaced, at least in part, by calcination and/or ion exchange with other cations. Thus, the original cationic form may be exchanged into a hydrogen or hydrogen ion precursor form or a form in which the original cations have been replaced by a metal of Groups IIA, IIIA, IVA, IB, IIB, IIIB, IVB, VIB and VIII of the Periodic Table. Thus, it is possible to exchange the original cations with ammonium ions or with hydronium ions. Catalytically active forms of the zeolite include, in particular, the hydrogen, rare earth metal, aluminum, Group II metal, Group VIII metal and manganese forms.

While the crystalline silicate ZSM-48 of the invention may be used in a wide variety of organic compound, for example hydrocarbon compound, conversion reactions, it is especially useful in polymerization, aromatization and cracking. Other conversion processes for which the ZSM-48 may be utilized in one or more of its active forms include, for example, hydrocracking and converting light aliphatics into aromatics, for example by the process of U.S. Patent 3,760,024.

Synthetic ZSM-48 prepared in accordance with the invention can be used either in the organic nitrogen-containing and alkali metal containing form, the alkali metal and hydrogen form or another univalent or multivalent cationic form. It can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the zeolite or impregnated into or physically intimately mixed with a composition containing it. Thus, for example, in the case of platinum, the zeolite can be treated with a platinum metal-containing ion, and suitable platinum compounds for this purpose include chloroplatinic acid, platinous chloride and various compounds containing the platinumammine complex.

Synthetic ZSM-48, when employed either as an adsorbent or as a catalyst in a hydrocarbon conversion, should be dehydrated at least partially. This can be achieved by heating to a temperature of about 200 to about 600°C in an inert atmosphere, such as air or nitrogen, at atmospheric or subatmospheric pressures for between 1 and 48 hours. Dehydration can also be achieved at lower temperatures merely by placing the ZSM-48 in a vacuum, but a longer time is then required to obtain a sufficient amount of dehydration.

As mentioned above, synthetic ZSM-48 prepared in accordance with the invention can have the original cations associated with it replaced by a wide variety of other cations according to techniques well known in the art. Typical replacing cations include hydrogen, ammonium and metal cations and mixtures thereof. Of the replacing metallic cations, particular preference is given to cations of such metals as rare earths, Mn, Ca, Mg, Zn, Cd, Pd, Ni, Cu, Ti, Al, Sn, Fe and Co.

Typical ion exchange techniques involve contacting the synthetic ZSM-48 with a salt of the desired replacing cation or cations. Although a wide variety of salts can be employed, particular preference is given to the chlorides, nitrates and sulfates.

Representative ion exchange techniques are described in a wide variety of publications including U.S. Patents 3,140,249; 3,140,251; and 3,140,253.

Following contact with the solution of the salt of the desired replacing cation, the zeolite is then preferably washed with water and dried at a temperature of 65 to about 315°C and thereafter calcined in air or other inert gas at a temperature of about 200 to about 815°C for a period of time of 1 to 48 hours or more to produce a catalytically-active thermal decomposition product.

Regardless of the cation replacing the alkali metal in the synthesized form of the ZSM-48, the spatial arrangement of the aluminum, silicon and oxygen atoms which form the basic crystal lattices of the ZSM-48 remains essentially unchanged as determined by taking an X-ray powder diffraction pattern of the ion-exchanged material.

The crystalline ZSM-48 prepared by the method of the invention is formed in a wide variety of particle sizes. Generally, however, the ZSM-48 will be used as a catalyst in the form of a powder, granules, or a molded product, such as an extrudate, having a particle size sufficient to pass through a 2 mesh (Tyler) screen and be retained on a 400 mesh (Tyler) screen. In cases where the catalyst is molded, such as by extrusion, the ZSM-48 can be composited and extruded before drying or dried or partially dried and then composited and extruded.

As in the case of many catalytic materials, it is desirable to composite the ZSM-48 with another material resistant to the temperatures and other conditions employed in organic conversion processes. Such matrix materials include active and inactive materials and synthetic or naturally occurring zeolites as well as inorganic materials such as clays, silica and/or metal oxides, for example alumina. The latter may be either naturally occurring or in the form of gelatinous precipitates, sols or gels including mixtures of silica and metal oxides. Use of a material which is catalytically active may enhance the conversion and/or selectivity of the resulting catalyst in certain organic conversion processes. Inactive materials suitably serve as diluents to control the amount of conversion in a given process so that products can be obtained in an economic and orderly manner without employing other means for controlling the rate of reaction. Frequently, crystalline silicate materials have been incorporated into naturally occurring clays, for example bentonite and kaolin. These materials, that is clays and oxides,

function, in part, as binders for the catalyst. It is desirable to provide a catlyst having good crushing strength, because in a petroleum refinery the catalyst is often subject to rough handling, which tends to break the catalyst down into powder-like materials which cause problems in processing.

Naturally occurring clays which can be composited with the ZSM-48 include the montmorillonite and kaolin families which include the sub-bentonites, and the kaolins commonly known as Dixie, McNamee, Georgia and Florida clays, or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the ZSM-48 can be composited with a porous matrix material such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a co-gel. A mixture of these components can also be used. The relative proportions of finely divided crystalline silicate ZSM-48 and inorganic oxide gel matrix vary widely with the crystalline silicate content ranging from about 1 to about 90 percent by weight, preferably about 2 to about 50 percent by weight of the composite.

Using a catalyst containing ZSM-48 according to the invention and containing also a hydrogenation component, reforming stocks can be reformed at temperatures of 370 to 540°C, pressures of 790 to 7000 kPa, preferably 1480 to 5000 kPa and liquid hourly space velocities of 0.1 to 10, preferably 0.5 to 4 and a hydrogen to hydrocarbon mole ratio of 1 to 20, preferably 4 to 12.

Such catalysts incorporating a hydrogenation component, for example platinum, can also be used for hydroisomerization of normal paraffins. Hydroisomerization may be carried out at temperatures of 90 to 370°C, preferably 140 to 290°C, at liquid hourly space velocities of 0.01 to 2, preferably 0.25 to 0.50, and a hydrogen to hydrocarbon mole ratio of 1 to 5. Additionally, such catalysts can be used for olefin or aromatics' isomerization at temperatures of 0 to 370°C.

Catalyst containing ZSM-48 can also be used for reducing the pour point of gas oils, at liquid hourly space velocities of about 10 to about 30 and temperatures of about 400 to 540°C.

Other reactions that can be carried out employing ZSM-48 catalysts containing a metal, for example platinum, include hydrogenation-dehydrogenation, desulfurization, olefin polymerization (oligomerization), and other organic compound conversions such as the conversion of alcohols (for example methanol) into hydrocarbons.

The following examples illustrate the invention.

## EXAMPLES

The Examples set out in following Table 1 were carried out to demonstrate the synthesis of crystalline silicate ZSM-48. The method of the invention enables pure ZSM-48 to be produced with a higher tetrahedral aluminum content (and hence much higher catalytic activity) than has been the case with conventional methods.

The linear diquaternary ammonium compounds used in the Examples had the structure

$$[(CH_3)_3\ N^+(CH_2)_m\ N^+(CH_3)_3]\ (X^-)_2$$

with m = 5, 6, 8, 9 or 10 and X = Br or I. "Diquat-6" (m = 6) was used as the iodide salt whereas each of "Diquat-5", "Diquat-8", "Diquat-9" and "Diquat-10" (m = 5, 8, 9 or 10) was used as the bromide salt.

The other components used in Examples 1, 2, 3 and 6 were silica sol (30% $SiO_2$), NaOH and water; no separate aluminum source was added. For Example 9, the other components were silica sol (30% $SiO_2$), $NaAlO_2$, NaOH and water.

In the case of Examples 4 and 5, "Q-Brand" sodium silicate (27.8% $SiO_2$; 8.4% $Na_2O$; 63.8% $H_2O$) and water were the other components; no separate aluminum source was added, but $H_2SO_4$ was added to adjust the $OH^-/SiO_2$ mole ratios to the desired levels.

For Examples 7, 8 and 10 to 15, the other components were "Q-Brand" sodium silicate, $Al_2(SO_4)_3\ 16H_2O$, and water. Again, the desired $OH^-/SiO_2$ mole ratios in the initial hydrogels were attained by addition of $H_2SO_4$.

In each Example listed in Table 1, the crystallization time is given together with the resulting zeolite product. The crystallization temperature was maintained at 160°C with stirring in each case. It should be noted from Example 15 that when the $SiO_2/Al_2O_3$ ratio of the reaction mixture is less than 100, synthesis with a diquaternary cation, at the proper composition, produces a different crystalline silicate framework and not ZSM-48.

The final product of each Example was filtered off, washed with water, and dried at 110°C.

## Table 1

| Example | R | Reaction Mixture Composition (Mole Ratios) $SiO_2/Al_2O_3$ | $H_2O/SiO_2$ | $OH^-/SiO_2$ | $Na^+/SiO_2$ | $R/SiO_2$ | Reaction Time, days | Product |
|---|---|---|---|---|---|---|---|---|
| 1 | Diquat-6 | ∞ | 40 | 0.20 | 0.20 | 0.10 | 3 | ZSM-48 (100%) |
| 2 | Diquat-6 | ∞ | 40 | 0.20 | 0.20 | 0.10 | 3 | ZSM-48 ( 90%) |
| 3 | Diquat-5 | ∞ | 40 | 0.30 | 0.30 | 0.10 | 4 | ZSM-48 (100%) |
| 4 | Diquat-8 | ∞ | 40 | 0.30 | 0.59 | 0.10 | 5 | ZSM-48 (100%) |
| 5 | Diquat-10 | ∞ | 40 | 0.20 | 0.59 | 0.10 | 7 | ZSM-48 (50%) |
| 6 | Diquat-9 | ∞ | 40 | 0.20 | 0.20 | 0.10 | 5 | ZSM-48 (85%) |
| 7 | Diquat-6 | 500 | 40 | 0.30 | 0.59 | 0.10 | 3 | ZSM-48 (100%) |
| 8 | Diquat-6 | 300 | 40 | 0.30 | 0.59 | 0.10 | 3 | ZSM-48 (95%) + -cristobalite |
| 9 | Diquat-8 | 200 | 40 | 0.20 | 0.24 | 0.10 | 3 | ZSM-48 (80%) |
| 10 | Diquat-6 | 200 | 40 | 0.20 | 0.59 | 0.10 | 6 | ZSM-48 (100%) |
| 11 | Diquat-6 | 200 | 40 | 0.20 | 0.59 | 0.10 | 6 | ZSM-48 (100%) |
| 12 | Diquat-6 | 180 | 40 | 0.30 | 0.59 | 0.10 | 3 | ZSM-48 (75%) |
| 13 | Diquat-6 | 150 | 40 | 0.20 | 0.59 | 0.10 | 4 | ZSM-48 (100%) |
| 14 | Diquat-6 | 100 | 40 | 0.20 | 0.59 | 0.10 | 3 | ZSM-48 (80%) |
| 15 | Diquat-6 | 90 | 40 | 0.30 | 0.59 | 0.10 | 4 | Other Crystalline Silicate (100%) |

The crystalline products of Examples 1 to 15, after being washed and dried, were submitted to chemical analysis and X-ray diffraction analysis. Table 2 lists the analytical compositions of these products The "composition" information in Table 2 was calculated on the basis of 100 ($SiO_4$ + $AlO_4$) tetrahedra ($100T_d$).

Table 2

| Example | C/N | Moles per mole $Al_2O_3$ $N_2O$: | $Na_2O$: | $SiO_2$ | Composition Al/100$T_d$ | $Na^+$/100$T_d$ | N/100$T_d$ | Molecules R/100$T_d$ |
|---|---|---|---|---|---|---|---|---|
| 1 | 5.6 | 5.6 | 3.5 | 207 | 0.96 | 3.3 | 5.3 | 2.5 |
| 2 | 5.1 | 12.2 | 2.2 | 362 | 0.55 | 2.4 | 6.7 | 2.8 |
| 4 | 7.8 | 15.5 | 2.0 | 694 | 0.29 | 5.7 | 4.4 | 2.5 |
| 5 | 8.7 | 18.0 | 5.7 | 979 | 0.20 | 1.2 | 3.7 | 2.0 |
| 7 | 5.9 | 4.5 | 2.2 | 184 | 1.1 | 2.4 | 4.8 | 2.4 |
| 8 | 6.3 | 2.6 | 0.4 | 119 | 1.6 | 0.7 | 4.3 | 2.3 |
| 10 | 5.8 | 3.1 | 0.11 | 121 | 1.6 | 1.6 | 5.0 | 2.4 |
| 11 | 5.5 | 3.7 | 0.53 | 142 | 1.4 | 0.7 | 3.2 | 1.5 |
| 12 | n.a. | n.a. | n.a. | 98 | 2.0 | n.a. | n.a. | n.a. |
| 13 | n.a. | 3.5 | 0.34 | 113 | 1.7 | 0.6 | 6.1 | n.a. |
| 14 | 6.6 | 2.3 | 0.87 | 85 | 2.3 | 2.0 | 5.2 | 2.9 |

CLAIMS:

1. A synthetic crystalline silicate having a compositional formula in the anhydrous state expressed in terms of moles of oxides per 100 moles of silica:

$$(0.05 \text{ to } 5)R_2O:(0.1 \text{ to } 10)M_2O:(0 \text{ to } 4)Al_2O_3:(100)SiO_2$$

in which M is an alkali metal cation and R is a cation derived from a linear diquaternary ammonium compound of the general formula

$$[(R')_3N^+(Z)_mN^+(R')_3](X^-)_2$$

in which each R' is an alkyl or heteroalkyl group having from 1 to 20 carbon atoms, a cycloalkyl or cycloheteroalkyl group having from 3 to 6 carbon atoms or an aryl or heteroaryl group; Z is an alkylene or heteroalkylene group having from 1 to 20 carbom atoms, an alkenylene or heteroalkenylene group having from 2 to 20 carbon atoms, or an arylene or heteroarylene group; m is 5, 6, 8, 9 or 10; and $X^-$ is an anion; and in which one or both quaternary nitrogens $N^+$ can form part of a heteroaliphatic or heteroaromatic ring structure; and the crystalline silicate being characterized by at least the following interplanar spacings d in Angstroms (1 Angstrom = 0.1 nm) and relative intensities $100I/I_0$ derivable from the X-ray diffraction pattern of the silicate in its calcined, sodium-exchanged form:

| d | 100I/Io |
|---|---|
| 11.8 ± 0.2 | S |
| 10.2 ± 0.2 | W-M |
| 7.2 ± 0.15 | W |
| 4.2 ± 0.08 | VS |
| 3.9 ± 0.08 | VS |
| 3.6 ± 0.06 | W |
| 3.1 ± 0.05 | W |
| 2.85 ± 0.05 | W |

2. A crystalline silicate according to claim 1, in which in the linear diquaternary ammonium compound, X is a halogen, each R' is an alkyl group having from 1 to 4 carbon atoms and Z is an alkylene group having from 1 to 4 carbon atoms.

3. A crystalline silicate according to claim 2, wherein X is bromine or iodine, R' is methyl and Z is methylene.

4. A crystalline silicate according to any one of claims 1 to 3, wherein M is sodium.

5. A synthetic crystalline silicate which has been obtained by subjecting a crystalline silicate according to any one of claims 1 to 4 to calcination and/or ion exchange at least partially to replace the alkali metal cations with one or more cations of hydrogen, a hydrogen precursor, a rare earth metal and a metal of Groups IIA, IIIA, IVA, IB, IIB, IIIB, IVB, VIB and VIII of the Periodic Table.

6. A method for preparing a crystalline silicate, which comprises preparing a reaction mixture containing sources of alkali metal oxide, an oxide of aluminum, an oxide of silicon, a cation of a linear diquaternary ammonium compound and water and having a composition expressed in terms of mole ratios of oxides falling within the following ranges:

| | |
|---|---|
| $SiO_2/Al_2O_3$ | at least 100 |
| $H_2O/SiO_2$ | 10 to 100 |
| $OH^-/SiO_2$ | 0 to 1.0 |
| $M_2O/SiO_2$ | 0 to 1.0 |
| $R_2O/SiO_2$ | 0.005 to 1.0 |

in which M and R have the meanings specified in claim 1, and maintaining the mixture at a temperature of 80 to 200°C until crystals of the silicate have formed.

7. A method according to claim 6, wherein the reaction mixture has the composition expressed in terms of mole ratios of oxides within the following ranges:

| | |
|---|---|
| $SiO_2/Al_2O_3$ | 100 to 10,000 |
| $H_2O/SiO_2$ | 20 to 70 |
| $OH^-/SiO_2$ | 0.1 to 0.4 |
| $M_2O/SiO_2$ | 0.05 to 0.5 |
| $R_2O/SiO_2$ | 0.025 to 0.5 |

8. A reaction mixture for use in the preparation of a crystalline silicate according to claim 1, having the composition specified in claim 6 or claim 7.